# FASCICULE DE BREVET EUROPEEN

(11) **EP 1 338 373 B1**
(45) Date de publication et mention de la délivrance du brevet: **12.10.2005**
(21) Numéro de dépôt: 03290286.8
(22) Date de dépôt: 05.02.2003
(51) Int. Cl.: B23P 19/04, B25B 27/24, F01L 3/10

(54) **Dispositif de réalisation d'un assemblage d'une queue de soupape et d'une coupelle**
Vorrichtung zur Realisierung des Zusammenbaus eines Ventilschafts und eines Federtellers
Device for realizing an assembly of a valve stem and a spring retainer

(30) Priorité: 13.02.2002 FR 0201764
(43) Date de publication de la demande: 27.08.2003
(73) Titulaire: COMAU SYSTEMES FRANCE S.A., 78190 Trappes (FR)
(72) Inventeur: Gauthier, Bruno, 75020 Paris (FR); Suarez, Adolfo, 75016 Paris (FR); Thurier, Yvan, 94320 Thiais (FR)
(74) Mandataire: Robert, Jean-Pierre

(56) Documents cités:
- EP-A- 0 491 680
- FR-A- 2 733 708
- PATENT ABSTRACTS OF JAPAN vol. 012, no. 286 (M-727), 5 août 1988 (1988-08-05) -& JP 63 062626 A (TOSHIBA CORP), 18 mars 1988 (1988-03-18)
- PATENT ABSTRACTS OF JAPAN vol. 014, no. 416 (M-1021), 7 septembre 1990 (1990-09-07) & JP 02 160435 A (ISUZU MOTORS LTD), 20 juin 1990 (1990-06-20)

## Description

La présente invention concerne un dispositif de réalisation d'un assemblage d'une queue de soupape et d'une coupelle par le moyen de deux demi-cônes, tel que défini par le préambule de la revendication 1.

Une soupape est rappelée en appui sur son siège au moyen d'un ressort comprimé entre une face extérieure de la culasse (le siège étant ménagé sur une face interne de celle-ci) et une coupelle calée sur la queue de soupape qui traverse la culasse au travers du siège.

Le calage de la coupelle sur la queue de soupape est réalisé de manière connue au moyen de deux demi-cônes qui se juxtaposent dans la coupelle et bloquent la queue de soupape par coincement sur la surface interne conique de la coupelle.

Les deux demi-cônes possèdent des bourrelets internes qui viennent se loger dans des gorges de la queue de soupape sous l'effet du coincement des demi-cônes dans la coupelle.

Le document EP 491 680 décrit un dispositif pour réaliser l' assemblage en question, selon le préambule de la revendication 1.

La présente invention est un perfectionnement à ce dispositif, comportant un outillage à partie télescopique mobile dans un fourreau et adapté pour s'appuyer respectivement sur les demi-cônes et sur la queue de soupape, le fourreau étant muni à son extrémité libre d'un organe de retenue de la coupelle et délimitant au-dessus de cet organe un chambrage intérieur pourvu d'aimants radiaux d'écartement des demi-cônes.

Selon l'invention, cet organe de retenue est formé par une bague d'extrémité pourvue d'aimants axiaux.

Dans un mode préféré de réalisation, cette bague est ménagée à l'extrémité d'une douille qui vient coiffer l'extrémité libre du fourreau. Cette douille forme une cartouche d'adaptation du dispositif à différents types de coupelles qui peuvent être mises en oeuvre.

Alors que le fourreau et la douille sont réalisés en matériau amagnétique, par exemple en laiton, il est préférable que la bague portée par la douille soit en acier afin que les champs des éléments axiaux ne perturbent pas la manipulation des demi-cônes comme cela sera expliqué ci-dessous.

D'autres caractéristiques et avantages de l'invention ressortiront de la description donnée ci-après d'un exemple de sa réalisation.

Il sera fait référence aux dessins annexés parmi lesquels :
- la figure 1 est une vue en coupe du dispositif selon l'invention,
- la figure 2 est une vue en perspective partielle de la douille mise en oeuvre dans le dispositif de la figure 1.

Les opérations de montage de coupelles sur des queues de soupapes consistent généralement, au moyen d'un manipulateur, d'un actionneur ou d'un robot, à prendre en charge une coupelle 1, préalablement équipée de ses deux demi-cônes 2 et 3 par l'extrémité d'un dispositif 4 associé à l'actionneur, à partir d'un poste d'attente en direction d'un poste intermédiaire qui comporte un contre-piston 5 permettant de dévêtir la coupelle 1 de ses demi-cônes 2 et 3. Le dispositif 4 est ensuite placé à l'aplomb de la queue de soupape à équiper comme, par exemple, cela est décrit dans le document EP 491 680.

Le dispositif 4 comporte un fourreau extérieur 10 d'axe 11 dans lequel sont montés à coulissement axial d'une part, un manchon tubulaire 12 et d'autre part, à l'intérieur du manchon 12, un piston 13. A son extrémité libre, le manchon 10 définit un chambrage 14 qui peut être balayé par le manchon 12 et au droit duquel une pluralité d'aimants radiaux 15 engendrent les champs magnétiques permettant de retenir contre les parois du chambrage 14, écartés l'un de l'autre, les demi-cônes 2a et 3a expulsés de la coupelle 1.

Au-delà de ce chambrage, l'extrémité frontale du fourreau 10 porte une bague 16, elle-même équipée d'aimants permanents 17 qui constituent des moyens de retenue de la coupelle 1 contre une surface extérieure frontale de cette bague 16. La bague 16 est solidaire d'une douille 18 qui est rapportée sur le manchon 10 par clipage ou tout autre moyen de connexion.

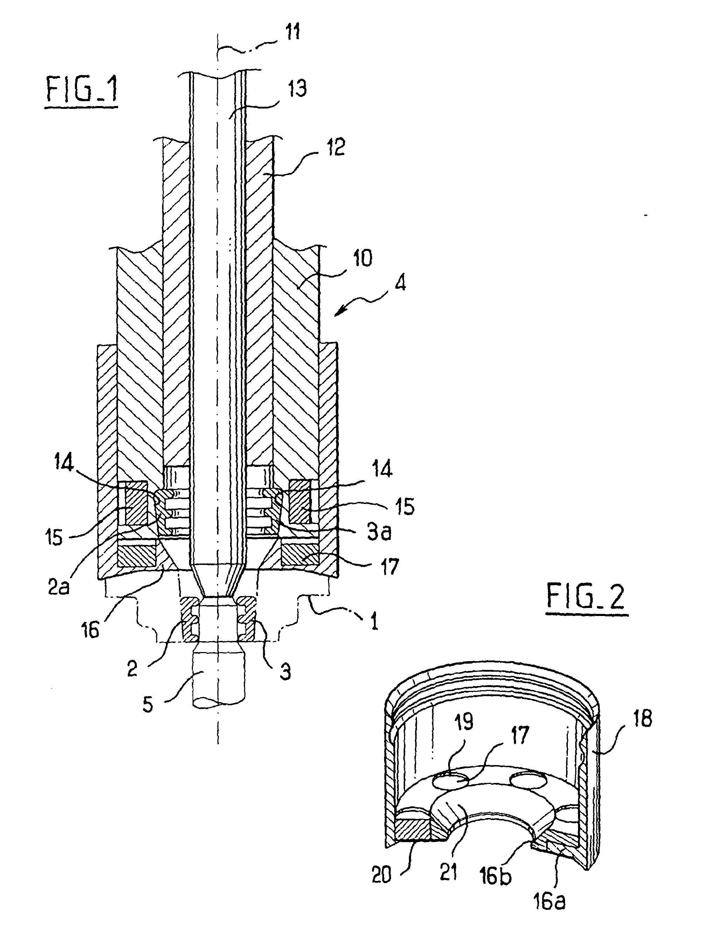

A la figure 2, on voit que la bague 16 est en deux parties. Une première partie 16a de celle-ci est en une seule pièce avec la douille 18 tandis qu'une seconde partie 16b est rapportée sur la partie 16a par exemple par collage. Alors que la douille 18 et la partie 16a sont en laiton, la partie 16b est en acier et comprend des orifices 19 de logement des aimants permanents 17 disposés en regard de lamages réalisés dans la partie 16a pour ne laisser subsister, au droit des aimants 17, qu'un voile mince 20 en matériau amagnétique de manière que l'entrefer séparant les aimants 17 de la coupelle 1 soit réduit au minimum.

Le dispositif 4 chargé de la coupelle 1 arrive à l'aplomb du contre-piston 5. Le piston 13 vient en appui sur ce contre-piston 5 tandis que le fourreau 10 continue à descendre le long de ce piston, les demi-cônes 2 et 3 sont ainsi progressivement extraits de la coupelle 1 et viennent progressivement se loger dans le chambrage 14 pour prendre leur position 2a et 3a. On a constaté qu'au passage de la bague 16, au niveau des aimants 17, il existait des interférences de champs magnétiques qui pouvaient perturber le mouvement relatif des demi-cônes par rapport à l'outil 4. Ces perturbations sont très nettement réduite lorsque, comme illustré à la figure 2, l'essentiel de la bague 16 est en acier.

Lorsque les demi-cônes ont atteint le chambrage 14, l'outil 4 est placé avec la coupelle 1 à l'aplomb de la queue de soupape à équiper, les séquences d'assemblage de la coupelle et de la queue de soupape sont conformes en général au document EP 491 680. On aura remarqué que la bague 16 possède en-dessous du chambrage 14 un évidemment intérieur 21 conique divergeant vers ce chambrage qui constitue une surface de resserrement des demi-cônes lorsque ceux-ci sont poussés vers le bas par le manchon 12 dans le cycle d'assemblage susdit.

## Revendications

1. Dispositif de réalisation d'un assemblage d'une queue de soupape et d'une coupelle (1) par le moyen de deux demi-cônes (2, 3), comportant un outillage (4) à partie télescopique mobile (12, 13) dans un fourreau (10) et adapté pour s'appuyer respectivement sur les demi-cônes (2, 3) et sur la queue de soupape, le fourreau (10) étant muni à son extrémité libre d'un organe de retenue de la coupelle (1) et délimitant au-dessus de cet organe un chambrage (14) intérieur pourvu d'aimants radiaux (15) d'écartement des demi-cônes (2, 3), **caractérisé en ce que** l'organe de retenue est formé par une bague (16) d'extrémité pourvue d'aimants axiaux (17).

2. Dispositif selon la revendication 1, **caractérisé en ce que** la bague (16) susdite est ménagée à l'extrémité d'une douille (18) venant coiffer l'extrémité libre du fourreau (10).

3. Dispositif selon la revendication 2, **caractérisé en ce que** la bague (16) est en acier (16b).

4. Dispositif selon l'une quelconque des revendications précédentes, **caractérisé en ce que** la bague (16) possède un évidement intérieur (21) tronconique divergeant vers le chambrage (14).

## Patentansprüche

1. Vorrichtung zum Durchführen der Montage eines Ventilschafts und eines Federtellers (1) mit Hilfe von zwei Halbkegeln (2, 3), umfassend ein Werkzeug (4) mit einem in einer Hülle (10) beweglichen, teleskopartigen Abschnitt (12, 13), das dazu geeignet ist, sich auf die Halbkegel (2, 3) bzw. auf den Ventilschaft zu stützen, wobei die Hülle (10) an ihrem freien Ende mit einem Halteelement zum Halten des Federtellers (1) versehen ist und über diesem Element eine innere Kammer (14) begrenzt, die mit radialen Magneten (15) zum Auseinanderhalten der Halbkegel (2, 3) versehen ist, **dadurch gekennzeichnet, dass** das Haltelement aus einem Stirnring (16) gebildet ist, der mit axialen Magneten (17) versehen ist.

2. Vorrichtung nach Anspruch 1, **dadurch gekennzeichnet, dass** der oben genannte Ring (16) am Ende einer Hülse (18) ausgebildet ist, die das freie Ende der Hülle (10) abdecken wird.

3. Vorrichtung nach Anspruch 2, **dadurch gekennzeichnet, dass** der Ring (16) aus Stahl (16b) ist.

4. Vorrichtung nach einem der vorhergehenden Ansprüche, **dadurch gekennzeichnet, dass** der Ring (16) eine kegelstumpfförmige innere Aussparung (21) aufweist, die in Richtung der Kammer (14) divergiert.

## Claims

1. A device for assembling a valve stem and a spring-retainer cup (1) by means of two half-cones (2, 3), the device comprising tooling (4) with a portion (12, 13) that is telescopically movable in a sheath (10) and that is adapted to bear respectively on the half-cones (2, 3) and on the valve stem, the sheath (10) being provided at its free end with a member for retaining the cup (1) and defining above said member an internal chamber (14) provided with radial magnets (15) for spacing the half-cones (2, 3) apart, the device being **characterized in that** the retaining member is formed by a end ring (16) provided with axial magnets.

2. A device according to claim 1, **characterized in that** the above-mentioned ring (16) is formed at the end of a bushing (18) that is fitted onto the free end of the sheath (10).

3. A device according to claim 2, **characterized in that** the ring (16) is made of steel (16b).

4. A device according to any preceding claim, **characterized in that** the ring (16) possesses a frustoconical internal recess (21) diverging towards the chamber (14).
